Europäisches Patentamt

European Patent Office

Office européen des brevets

(11) Veröffentlichungsnummer: **0 192 193**
**B1**

(12) **EUROPÄISCHE PATENTSCHRIFT**

(45) Veröffentlichungstag der Patentschrift: **31.10.90**

(21) Anmeldenummer: **86101839.8**

(22) Anmeldetag: **13.02.86**

(51) Int. Cl.⁵: **B 66 B 9/20**

(54) **Aus mehreren Teleskopschüssen bestehender Schrägaufzug.**

(30) Priorität: **16.02.85 DE 3505506**

(43) Veröffentlichungstag der Anmeldung:
**27.08.86 Patentblatt 86/35**

(45) Bekanntmachung des Hinweises auf die
Patenterteilung:
**31.10.90 Patentblatt 90/44**

(84) Benannte Vertragsstaaten:
**AT BE CH DE FR GB IT LI LU NL SE**

(56) Entgegenhaltungen:
**EP-A-0 080 038**
**DE-A-3 120 048**
**DE-A-3 222 697**
**DE-A-3 330 082**

(73) Patentinhaber: **Albert Böcker GmbH & Co. KG**
**Waldstrasse 1**
**D-4712 Werne (DE)**

(72) Erfinder: **Böcker, Albert**
**Im Thünen 28**
**D-4712 Werne (DE)**

Courier Press, Leamington Spa, England.

# Beschreibung

Die Erfindung betrifft einen aus mehreren Teleskopschüssen bestehenden Schrägaufzug, dessen einzelne Teleskopschüsse Führungsschienen für eine daran verfahrbare Lastenpritsche oder dgl. aufweisen, wobei wenigstens ein Teleskopschuß seilbetätigt mittels einer ebenfalls seilbetätigten, selbsttätig einschnappenden Riegelvorrichtung über ein. Gelenk abknickbar ausgebildet ist und der abgeknickte Abschnitt des Teleskopschusses der Führung eines weiteren Teleskopschusses dient.

Es sind solche Schrägaufzüge bekannt, die aus einer Mehrzahl von Teleskopschüssen bestehen und die im allgemeinen im Baugewerbe zum Transport von Lasten vom ebenerdigen Niveau auf den Dachbereich Verwendung finden. Auf derartigen Schrägaufzügen werden für die Beladung von Dachziegeln geeignete Lastenpritschen, Schüttkübel oder dgl. verfahren. Der obere, letzte Teleskopschuß ist mit Hilfe einer Seilumlenkvorrichtung in verschiedene Winkellagen abschwenkbar und in diesen Winkellagen festlegbar, wobei die Lastenpritsche oder dgl. den Knickbereich überfahren kann.

Bei einem bekannten Schrägaufzug der vorbeschriebenen Art ist sowohl das obere Ende des zweitletzten Teleskopschusses als auch das untere Ende des letzten Teleskopschusses mit einem Gelenk versehen, also abknickbar ausgebildet. Dabei ist es erforderlich, die Knickstellen beider Teleskopschüsse exakt übereinander zu fahren, damit abgeknickt werden kann. Derartige Schrägaufzüge haben sich bewährt. EP-A-00 80 038)

Nachteilig wurde bei den bekannten Schrägaufzügen jedoch empfunden, daß zunächst einmal zwei Knickstellen exakt übereinander gefahren werden mußten. Weiter ging durch den unteren, im zweitletzten Teleskopschuß verbleibenden abgeknickten Teil des letzten Teleskopschusses ein Teil der Nutzlänge des letzten Teleskopschusses verloren. Zum zweiten war es erforderlich, sowohl zum Einleiten des Abknickvorganges als auch während des Abknickvorganges beiderseits des Knickgelenkes beide Teleskopschüsse ineinander zu führen. Bei starker Abwinkelung übertragen sich dabei die in das Gelenk eingeleiteten Kräfte, so daß sich die aneinandergeführten Teile verformen. Dies wiederum wirkt sich nachteilig auf das Überfahren durch die Lastenpritsche oder dgl. aus, wobei es in Einzelfällen dazu kommen kann, daß die Lastpritsche die deformierte Knickstelle nicht mehr überfahren kann. Es war deshalb erforderlich, den vorbekannten Schrägaufzug im Bereich seiner Knickstelle sorgfältig zu warten.

Die Erfindung hat sich die Aufgabe gestellt, die vorbeschriebenen Nachteile zu beseitigen, d.h. die Verschleißanfälligkeit im Bereich der Abknickkung zu mindern, die Nutzlänge des letzten Teleskopschusses zu vergrößern und die Sicherheit beim Überfahren durch die Lastenpritsche zu erhöhen. Darüber hinaus ist es Aufgabe der Erfindung, eine baulich möglichst einfache Lösung zu finden, bei der die Anzahl der ineinander gleitend zu führenden Teile auf ein Minimum beschränkt werden.

Die Erfindung löst die gestellte Aufgabe bei einem Schrägaufzug der eingangs genannten Gattung dadurch, daß der weitere (also letzte) Teleskopschuß als starre Schieme ausgebildef ist und mit Bezug auf den abknickbaren Teleskopschuß in abgeknickter Stellung ausschließlich im abgeknickten Abschnitt desselben geführt und in diesem Abschnitt verriegelt ist.

Die Erfindung macht sich somit von der Überlegung frei, daß es erforderlich sei, den letzten Teleskopschuß mit einem Knickgelenk zu versehen. Vielmehr ist ausschließlich noch der vorletzte Teleskopschuß abgeknickt. Dies hat den Vorteil, daß der letzte Teleskopschuß als "in sich steifer" Teleskopschuß mit seinem freien Ende über die Knickstelle hinaus gefahren und erst nach Überfahren der Knickstelle abgewinkelt werden kann. Während des Überfahrens treten somit keine Zwängungen auf, weil sich das Knickgelenk im zweitletzten Teleskopschuß in einer absolut gestreckten Lage befindet und der letzte Teleskopschuß keine Knickstellen, die die Führung undefinierbar machen, aufweist. Da der letzte Teleskopschuß mit seinem freien unteren Ende die Knickstelle völlig überfahren kann, kann seine volle Länge benutzt werden; gegenüber dem bekannten Schrägaufzug können etwa 800 mm Nutzlänge mehr erreicht werden, was bei dem Transport der schweren Lasten in den Dachbereich von außerordentlichem Vorteil ist. Dieser Vorteil ist vor dem Hintergrund von Vorschriften zu sehen, die die Länge der einzelnen Teleskopschüsse limitieren.

Von Bedeutung ist weiterhin die Vereinfachung des Gelenkes; da nunmehr nicht mehr zwei Gelenkachsen (nämlich die Gelenkachsen beider Teleskopschüsse) zur Deckung gebracht werden müssen, werden in das Gelenk keine Zwängungen eingeleitet.

Die Verriegelung der beiden Teleskopschüsse zueinander befindet sich nicht mehr wie bei der bekannten Ausführungsform außerhalb des Knickbereiches im "geraden" Teil des zweitletzten Teleskopschusses, sondern wurde erfindungsgemäß in den abgeknickten Abschnitt des zweitletzten Teleskopschusses gelegt. Hier können die beiden Teleskopschüsse zuverlässig und betriebssicher miteinander verriegelt werden.

In Ausgestaltung der Erfindung ist das Knickgelenk durch ein die Führungsschienenlaufbahn überbrückendes Scharniergelenk gebildet und breiter als die Führungsschienenlaufbahn ausgeführt. Die Verbreiterung richtet sich dabei nach außen, so daß die Innenseiten bündig verlaufen und die Rollen der Lastenpritsche oder dgl. sicher führen. Das Scharniergelenk ist vorteilhaft so ausgebildet, daß es oberhalb der Führungsschienenlaufbahn angeordnet ist und Scharnierlappen aufweist, welche mit ihren freien Enden auf das Niveau der Führungsschienenlaufbahn auslaufend ausgebildet sind. Auf diese Weise ist ein stoßfreier Übergang der Oberrollen der Lastenpritsche oder dgl. von der eigentlichen Führungsschienenlaufbahn auf das Scharniergelenk möglich.

Von besonderer Bedeutung ist die Ausbildung des abgeknickten Abschnittes des zweitletzten Teleskopschusses. Hier schlägt die Erfindung vor, daß dieser Abschnitt einen Querträger aufweist, an dem ein Teil der Riegelvorrichtung angeordnet ist. Dieser Querträger - und damit der Teil der Riegelvorrichtung - befindet sich somit am äußersten Ende des zweitletzten Teleskopschusses, was eine maximale Ausnutzung der Nutzlängen der Führungsschiene bedeutet. Der Querträger selbst ist im einzelnen so ausgestaltet, daß er über Teile seiner Breite doppelplattig ausgebildet ist und zwischen den Platten ein durch eine Feder belasteter, den Riegelbolzen tragender Hebel geführt ist. Gleichzeitig sind an dem Querträger Abweiserrollen für das Lastseil angeordnet.

Der zweite Teil der Verriegelung befindet sich an dem weiteren (letzten) Teleskopschuß. Er wird dadurch gebildet, daß dieser Teleskopschuß endseitig einen Quergurt aufweist, der eine die Gegenverriegelung bildende Riegelfalle besitzt.

Um ein zu weites Ausfahren des letzten Teleskopschusses zu verhindern, sind sowohl an dem abgeknickten Abschnitt des zweitletzten Teleskopschusses einerseits als auch an dem weiteren (letzten) Teleskopschuß andererseits Ausfahrbegrenzer angeordnet.

Es versteht sich, daß die flaschenzugartige Umlenkung des Schienenseils auf relativ kurzem Raum erfolgen muß, da die den Knickbereich unterseitig der Teleskopschüsse aussteifenden Lenker und Stützträger nicht beliebig lang ausgebildet werden können. Aus diesem Grunde schlägt die Erfindung bei einem Schrägaufzug der eingangs genannten Gattung, wobei die Abknickung über ein über mehrere Rollen flaschenzugartig geführtes Schienenseil erfolgt, und die Rollen in einem den weiteren Teleskopschuß untergreifenden Querträger gelagert sind, der mittels Führungsschuhen gleitend an dem weiteren Teleskopschuß geführt ist, vor, daß der Querträger zwei in Längsrichtung des Teleskopschusses versetzte Rollen aufweist, deren Achsen zueinander geneigt verlaufen. Durch die Neigung der Achsen kann das von einer dieser beiden Rollen ablaufende Schienenseil ohne Zwängungen zu dem das Ende des abgeknickten vorletzten Teleskopschusses bildenden Querträger zurücklaufen und dort befestigt werden.

In vorteilhafter Ausgestaltung der Erfindung wird bei einem Schrägaufzug der eingangs genannten Gattung, wobei die Abknickung über ein über mehrere Rollen flaschenzugartig geführtes Schienenseil erfolgt, und die Rollen in einem den unteren Teleskopschuß untergreifenden Querträger gelagert sind, der mittels Führungsschuhen gleitend an dem weiteren Teleskopschuß geführt ist, und wobei die Führungsschuhe über Teleskoprohre mit dem nicht abgeknickten Abschnitt des Teleskopschusses verbunden sind, weiter vorgeschlagen, daß die Teleskoprohre einen einstellbaren Endanschlag aufweisen.

Diese technische Lehre ermöglicht ein exaktes Justieren der wirksamen Einfahrlänge der Teleskoprohre, so daß die gestreckte Position des zweitletzten Teleskopschusses (gestrecktes Gelenk) genau definiert werden kann, was eine einwandfreie Führung des letzten Teleskopschusses zur Folge hat.

In weiterer Ausgestaltung der Erfindung sind die Teleskoprohre endseitig gabelartig einerseits an einem am nicht abgeknickten Abschnitt des abknickbaren Teleskopschusses angeordneten Stützträger, andererseits gabelartig an dem Führungsschuh angeschlossen und als einstellbarer Endanschlag ist eine Distanzierungsschraube vorgesehen.

Die Erfindung wird nachfolgend anhand eines Ausführungsbeispieles näher erläutert.

Es zeigen:

Fig. 1 in schematischer Darstellung einen Schrägaufzug

Fig. 2 den Abknickbereich in einer teilweise geschnittenen Darstellung

Fig. 3 den Abknickbereich gemäß Fig. 2 in perspektivischer Darstellung

Fig. 4 eine Draufsicht auf den Abknickbereich gemäß Fig. 2

Fig. 5 in perspektivischer Darstellung, gegenüber Fig. 6 vergrößert, die Riegelvorrichtung

Fig. 6 eine Draufsicht auf die Riegelvorrichtung bei noch gestrecktem Teleskopschuß b, wobei der Teleskopschuß a noch teilweise in den Teleskopschuß b eingefahren ist (unverriegelte Stellung)

Fig. 7 den Schnitt nach der Linie VII-VII nach Fig. 6

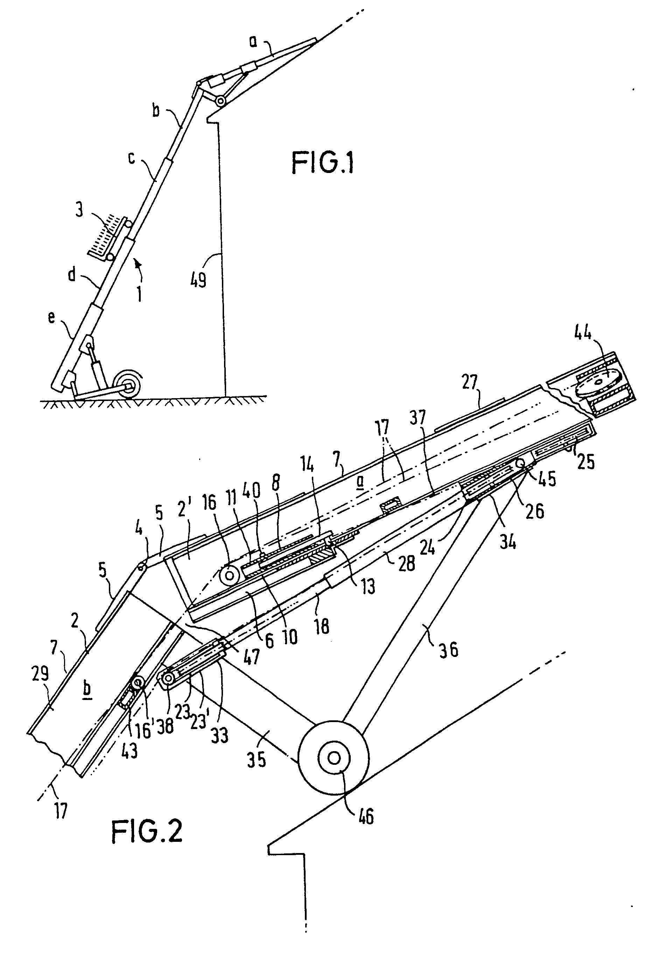

Der Schrägaufzug 1 besteht aus mehreren Teleskopschüssen a - e, an denen im dargestellten Ausführungsbeispiel eine Lastenpritsche 3 geführt ist. Mit 49 ist die Seitenwand eines Gebäudes bezeichnet. Zwischen den Teleskopschüssen a und b ist ein Scharniergelenk 4 vorgesehen. Das Scharniergelenk besteht aus jeweils zwei Scharnierlappen 5, die die Führungsschiene 2 und die Führungsschiene 2' miteinander verbinden. Wie insbesondere aus Fig. 2 ersichtlich, laufen die Scharnierlappen 5 im Bereich der Führungsschienenlaufbahnen 7 aus, so daß ein stoßfreies Überfahren durch die Lastenpritsche 3 ermöglicht wird.

Im unteren Bereich ist die Knickstelle (s. Pos. 47 in Fig. 2) nicht durch ein Scharnier verbunden; die Erfindung wird jedoch nicht verlassen, wenn hier ein Scharnier vorgesehen ist, welches gleitverschieblich unterhalb des Unterflansches der Führungsschiene 2 so angeordnet ist, daß es als tragendes Gelenk in den Abknickbereich einbezogen werden kann.

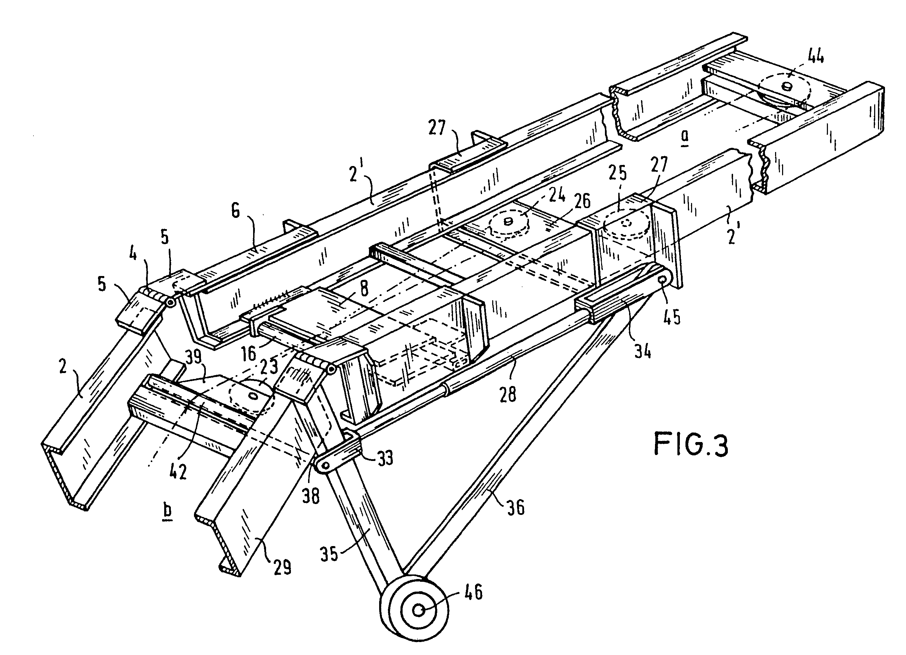

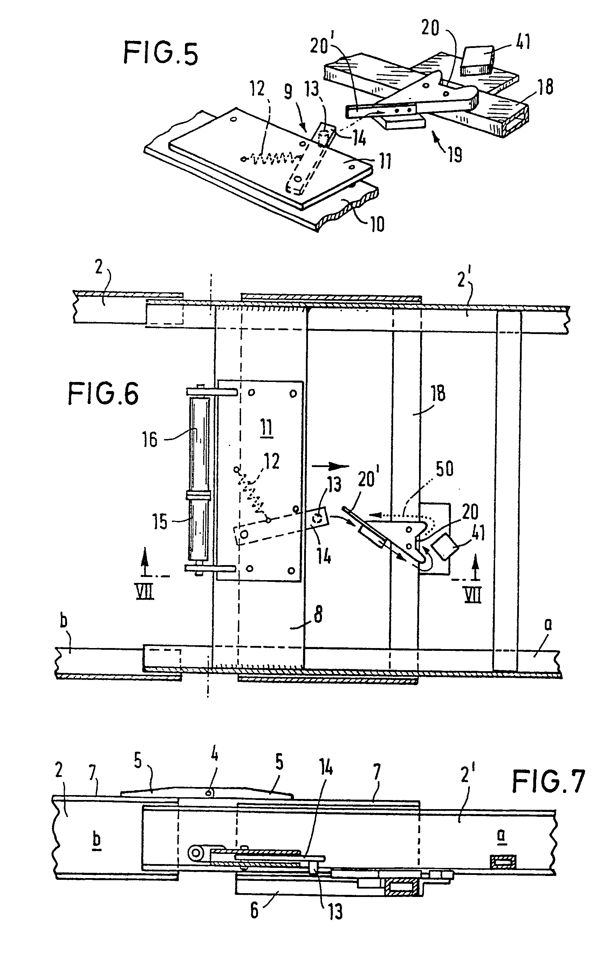

Wie insbesondere aus Fig. 3 und 6 ersichtlich, ist am äußersten Ende des abgeknickten Abschnittes 6 ein Querträger 8 vorgesehen, der aus zwei mit Abstand übereinander angeordneten Platten 10 und 11 besteht. Zwischen diesen beiden Platten 10 und 11 ist ein Teil 9 der Riegelvorrichtung angeordnet, der im wesentlichen aus dem Hebel 14 mit dem Riegelbolzen 13 und der zugeordneten Feder 12 besteht.

Mit 15, 15', 16 und 16' sind Abweiserrollen bezeichnet, die das Lastseil 17 führen sollen.

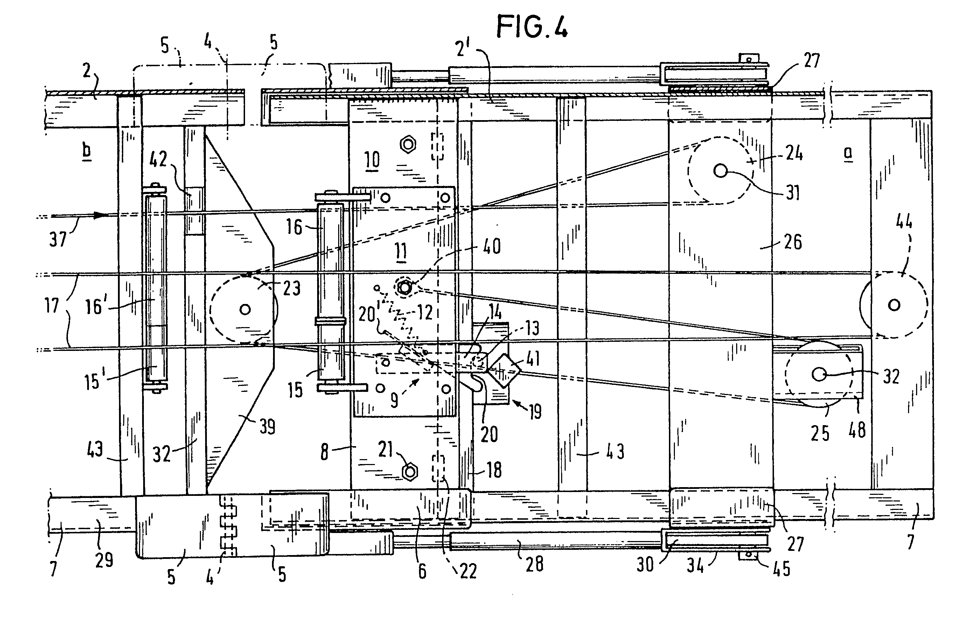

Am letzten (weiteren) Teleskopschuß a ist ein Quergurt 18 (Fig. 5 und 6) angeordnet, welcher die Gegenverriegelung 19 trägt. Die Gegenverriegelung 19 besteht im wesentlichen aus der Riegelfalle 20 mit der Blattfeder 20' und dem Sperrstück 41. Es ist ersichtlich, daß bei voll eingerasteter Verriegelung (Fig. 2 und 4) der Riegelbolzen 13 die Riegelfalle 20 umfahren hat und in der Vertiefung dieser Riegelfalle einrastet. Erst bei erneutem Ausfahren des weiteren (letzten) Teleskopschusses gibt die Riegelfalle den Riegelbolzen frei, so daß er in der Bildebene nach links (aufgrund der Belastung der Feder 12, siehe Pfeilrichtung 50 in Fig. 6) herumwandern und die Riegelfalle umfahren kann.

Damit der weitere (letzte) Teleskopschuß a nicht zu weit ausgefahren werden kann, sind mit 21 und 22 bezeichnete Ausfahrbegrenzer vorgesehen, wobei der Ausfahrbegrenzer 22 an einem Querholm des letzten Teleskopschusses und der Ausfahrbegrenzer 21 an dem Querträger 8 angeordnet ist.

Wie aus der Fig. 4 ersichtlich, ist das als Schienenseil 37 bezeichnete Seil (welches sowohl die Teleskopschüsse ein- bzw. ausfährt als auch die Abknickung bewirkt) von der nicht dargestellten Winde kommend zunächst über die Rolle 24 geführt. Die Rolle 24 ist in einem als Rollenkasten ausgebildeten Querträger 26 angeordnet. Von hier aus ist das Schienenseil weiter über die mit 23 bezeichnete Rolle geführt, welche in dem Rollenkasten 39 verlagert ist, der seinerseits über eine Schwenkachse 38 an dem nicht abgeknickten (geraden) Abschnitt 29 des zweitletzten Teleskopschusses gelagert ist. Von hier aus verläuft das Schienenseil weiter zur Rolle 25 und von dort aus weiter zu der mit 40 bezeichneten Befestigung am Querträger 8. Die Rolle 25 ist in einem besonderen Rollenkasten 48 (Fig. 4) gelagert, der außenseitig am Querträger 26 angeschweißt ist. Die Rollen 24 und 25 sind somit in Längsrichtung des Teleskopschusses versetzt. Durch die besondere Verlagerung der Rolle 25 und durch eine Neigung des Rollenkastens 48 gegenüber der senkrechten wird erreicht, daß das Schienenseil 37 etwas schräg auf die Rolle 25 aufläuft, so daß ein besserer Verlauf zum Befestigungspunkt 40 gegeben ist. Die Achsen 31 und 32 der Rollen 24 und 25 sind somit etwas gegeneinander geneigt.

Der Querträger 26 besitzt in bekannter Weise Führungsschuhe 27, mit denen er die Führungsschienen 2' des Teleskopschusses a gleitend übergreift.

Das Lastseil 17 ist am äußersten Ende des letzten Teleskopschusses a über eine Rolle 44 geführt, wobei Abweiserrollen 15, 15', 16 und 16' ebenso der Führung des Lastseiles dienen wie die Abweiserrolle 42 der Führung des Schienenseils dient.

Außenseitig bzw. unterseitig des Knickbereiches sind am abgeknickten Teleskopschuß b Stützträger 35 vorgesehen, die winkelsteif mit diesem verbunden sind.

Über eine Schwenkachse 46 ist an diesen Stützträger ein Lenker 36 angeschlossen, der wiederum mittels einer Schwenkachse 45 mit dem Gleitschuh 27 verbunden ist. An dem Gleitschuh 27 ist weiterhin die Gabel 34 eines äußeren Teleskoprohres befestigt, das allgemein mit 28 bezeichnet ist. Das innere Teleskoprohr greift anderenends mit einer weiteren Gabel 33 an einer Schwenkachse 38 an, welche gleichzeitig den Rollenkasten 39 trägt. Im Bereich der Gabel 34 ist ein mit 30 bezeichneter, einstellbarer Endanschlag vorgesehen, mit dessen Hilfe die wirksame Länge des Teleskoprohres exakt bestimmt werden kann.

Die Gabel 34 ist über die Schwenkachse 45 sowohl am Gleitschuh 27 als auch am Lenker 36 schwenkbar gelagert. Zur Querversteifung der einzelnen Teleskopschüsse dienen Versteifungsgurte, die mit 43 bezeichnet wurden.

Bezugzeichenliste
1 = Schrägaufzug
2 = Führungsschiene an b
2' = Führungsschiene an a
3 = Lastenpritsche
4 = Scharniergelenk
5 = Scharnierlappen
6 = abgenknickter Abschnitt von b
7 = Führungsschienenlaufbahn
8 = Querträger
9 = Teil der Riegelvorrichtung
10 = Platte des Querträgers 8
11 = Platte des Querträgers 8
12 = Feder
13 = Riegelbolzen
14 = Hebel
15 = Abweiserrolle
15' = Abweiserrolle
16 = Abweiserrolle
16' = Abweiserrolle
17 = Lastseil
18 = Quergurt am Teleskopschuß a
19 = Gegenverriegelung
20 = Riegelfalle
20' = Blattfeder
21 = Ausfahrbegrenzer
22 = Ausfahrbegrenzer
23 = Rolle
23' = Rollenkasten
24 = Rolle
25 = Rolle
26 = Querträger
27 = Führungsschuhe
28 = Teleskoprohre
29 = nicht abgeknickter Abschnitt von b
30 = einstellbarer Endanschlag
31 = Achse der Rolle 24
32 = Achse der Rolle 25
33 = Gabel am Teleskoprohr am Stützträger 35
34 = Gabel am Teleskoprohr am Stützträger 35
35 = Stützträger
36 = Lenker
37 = Schienenseil
38 = Schwenkachse
39 = Rollenkasten

40 = Befestigung für Schienenseil
41 = Sperrstück
42 = Abweiserrolle
43 = Versteifungsgurte
44 = Rolle für Lastseil
45 = Schwenkachse
46 = Schwenkachse
47 = Position in Fig. 2
48 = Rollenkasten
49 = Seitenwand eines Gebäudes
50 = Pfeilrichtung
a = weiterer Teleskopschuß
b = abgeknickter Teleskopschuß
c = Teleskopschüsse
d = "
e = "

**Patentansprüche**

1. Aus mehreren Teleskopschüssen bestehender Schrägaufzug (1) dessen einzelne Teleskopschüsse (a-e) Führungsschienen für eine daran verfahrbare Lastenpritsche (3) oder dgl. aufweisen, wobei wenigstens ein Teleskopschuß (a) seilbetätigt mittels einer ebenfalls seilbetätigten, selbsttätig einschnappenden Riegelvorrichtung (9, 13, 19, 20) über ein Gelenk abknickbar ausgebildet ist und der abgeknickte Abschnitt des Teleskopschusses der Führung eines weiteren Teleskopschusses dient, dadurch gekennzeichnet, daß der weitere Teleskopschuß (a) als starre Führungsschiene ausgebildet und mit Bezug auf den abknickbaren Teleskopschuß (b) in abgeknickter Stellung ausschließlich im abgeknickten Abschnitt (6) desselben geführt und in diesem Abschnitt verriegelt ist.

2. Schrägaufzug nach Anspruch 1, dadurch gekennzeichnet, daß das Knickgelenk durch ein die Führungsschienenlaufbahn (7) überbrückendes Scharniergelenk (4) gebildet ist.

3. Schrägaufzug nach Anspruch 2, dadurch gekennzeichnet, daß das die Führungsschienenlaufbahn (7) überbrückende Scharniergelenk (4) breiter ausgebildet ist als die Führungsschienenlaufbahn.

4. Schrägaufzug nach Anspruch 2 oder 3, dadurch gekennzeichnet, daß das die Führungsschienenlaufbahn (7) überbrückende Scharniergelenk (4) oberhalb der Führungsschienenlaufbahn angeordnet ist und auf das Niveau der Führungsschienenlaufbahn auslaufende Scharnierlappen (5) aufweist.

5. Schrägaufzug nach einem der Anspruch 1-4, dadurch gekennzeichnet, daß der abgeknickte Abschnitt (6) des Teleskopschusses (b) einen Querträger (8) aufweist, an dem ein Teil der Riegelvorrichtung (9) angeordnet ist.

6. Schrägaufzug nach Anspruch 5, dadurch gekennzeichnet, daß der Querträger (8) über Teile seiner Breite doppelplattig (Platte (10), Platte (11)) ausgebildet ist und zwischen den Platten ein durch eine Feder (12) belasteter, den Riegelbolzen (13) tragender Hebel (14) geführt ist.

7. Schrägaufzug nach Anspruch 5 oder 6, dadurch gekennzeichnet, daß an dem Querträger (8) Abweiserrollen (15, 16) für das Lastseil (17) angeordnet sind.

8. Schrägaufzug nach Anspruch 1, dadurch gekennzeichnet, daß der weitere Teleskopschuß (a) endseitig einen Quergurt (18) mit einer die Gegenverriegelung (19) bildenden Riegelfalle (20) aufweist.

9. Schrägaufzug nach Anspruch 1, dadurch gekennzeichnet, daß an dem abgeknickten Abschnitt (6) einerseits und im weiteren Teleskopschuß (a) andererseits Ausfahrbegrenzer (21, 22) angeordnet sind.

10. Teleskopschuß nach Anspruch 1, wobei die Abknickung über ein über mehrere Rollen flaschenzugartig geführtes Schienenseil erfolgt und die Rollen in einem den weiteren Teleskopschuß untergreifenden Querträger gelagert sind, der mittels Führungsschuhen gleitend an dem weiteren Teleskopschuß geführt ist, dadurch gekennzeichnet, daß der Querträger (26) zwei in Längsrichtung des Teleskopschusses (a) versetzte Rollen (24, 25) aufweist, deren Achsen (31, 32) zueinander geneigt verlaufen.

11. Schrägaufzug nach Anspruch 1, wobei die Abknickung über ein über mehrere Rollen flaschenzugartig geführtes Schienenseil erfolgt und die Rollen in einem den unteren Teleskopschuß untergreifenden Querträger gelagert sind, der mittels Führungsschuhen gleitend an dem weiteren Teleskopschuß geführt ist und die Führungsschuhe über Teleskoprohre mit dem nicht abgeknickten Abschnitt des Teleskopschusses verbunden sind, dadurch gekennzeichnet, daß die Teleskoprohre (28) einen einstellbaren Endanschlag (30) aufweisen.

12. Schrägaufzug nach Anspruch 11, dadurch gekennzeichnet, daß die Teleskoprohre (28) endseitig gabelartig (Gabel (33)) einerseits an einem am nicht abgeknickten Abschnitt (29) des abknickbaren Teleskopschusses (b) angeordneten Stützträger (35), andererseits gabelartig (Gabel (34)) an dem Führungsschuh (27) angeschlossen sind und als einstellbarer Endanschlag (30) eine Distanzierungsschraube vorgesehen ist.

**Revendications**

1. Elévateur incliné (1) formé par plusieurs sections télescopiques, les sections télescopiques individuelles (a-e) comprenant des rails de guidage destinés à un chariot mobile (3) ou analogue, l'une au moins des sections télescopiques (a) étant constituée de façon à pouvoir pivoter automatiquement par l'intermédiaire d'une articulation au moyen d'un dispositif de verrouillage (9, 13, 19, 22) également actionné par un câble et s'enclenchant automatiquement, et la partie pivotante de la section télescopique servant au guidage d'une autre section télescopique, caractérisé en ce que la section télescopique supplémentaire (a) est constituée sous forme d'un rail de guidage rigide et est guidée par rapport à la section pouvant pivoter (b) exclusivement dans la section pivotante (6) de celle-ci et verrouillée dans cette section.

2. Elévateur incliné selon la revendication 1, caractérisé en ce que l'articulation de pivotement est constituée par une articulation à charnière (4) raccordant la voie de roulement des rails de guidage (7).

3. Elévateur incliné selon la revendication 2, caractérisé en ce que l'articulation à charnière (4) qui raccorde la voie de roulement de rails de guidage (7) est plus large que la voie de roulement des rails de guidage.

4. Elévateur incliné selon la revendication 2 ou 3, caractérisé en ce que l'articulation à charnière (4) qui raccorde la voie de roulement des rails de guidage (7) est disposée au-dessus de la voie de roulement des rails de guidage et comprend des branches de charnière (5) disposées au niveau de la voie de roulement des rails de guidage.

5. Elévateur incliné selon l'une quelconque des revendications 1 à 4, caractérisé en ce que la section pivotante (6) de la section télescopique (b) comprend un support transversal (8) sur lequel est montée une partie du dispositif de verrouillage (9).

6. Elévateur incliné selon la revendication 5, caractérisé en ce que le support transversal (8) est constitué sur une partie de sa largeur sous forme d'une double plaque (plaque 10, plaque 11), et en ce qu'entre les plaques passe un levier (14) supportant le tenon de verrouillage (13) et chargé par un ressort (12).

7. Elévateur incliné selon la revendication 5 ou 6, caractérisé en ce que des rouleaux déflecteurs (15, 16) destinés au câble de charge (17) sont montés sur le support transversal (8).

8. Elévateur incliné selon la revendication 1, caractérisé en ce que la section télescopique supplémentaire (a) comprend à son extrémité une membrure transversale (18) comportant une clenche (20) formant le contre-verrouillage (19).

9. Elévateur incliné selon la revendication 1, caractérisé en ce que sont constituées dans la section pivotante (16) d'une part et dans l'autre section télescopique (a) d'autre part des butées de limite de déploiement (21, 22).

10. Elévateur incliné selon la revendication 1, dans lequel le pivotement est réalisé au moyen d'un câble à rails passant sur plusieurs roues du type poulie et les roues sont montées dans un support transversal passant au-dessous de l'autre section télescopique, qui est guidé de façon coulissante sur l'autre section télescopique par des patins de guidage, caractérisé en ce que le support transversal (26) comprend deux roues (24, 25) décalées en direction longitudinale de la section télescopique (a), dont les axes (31, 32) sont inclinés l'un par rapport à l'autre.

11. Elévateur incliné selon la revendication 1, dans lequel le pivotement s'effectue par l'intermédiaire d'un câble à rails passant sur plusieurs roues de type poulie et les roues sont montées dans un support transversal passant au-dessous de la section télescopique inférieure, qui est guidée de façon coulissante sur l'autre section télescopique par des patins de guidage, les patins de guidage étant reliés par des tubes télescopiques à la section qui n'est pas pivotante, caractérisé en ce que les tubes télescopiques (98) comprennent une butée d'extrémité réglable (30).

12. Elévateur incliné selon la revendication 11, caractérisé en ce que les tubes télescopiques (28) sont raccordés à une extrémité par une chape (chape 33) d'une part à la section non pivotante (29) de la section télescopique (b) pouvant pivoter et d'autre par une chape (chape 34) au patin de guidage (27), et en ce qu'il est prévue une vis d'écartement en tant que butée d'extrémité réglable (30).

**Claims**

1. Sloping elevator (1), consisting of a plurality of telescope runners, the individual telescope runners (a-e) of which have guide rails for a load-bearing platform (3) or the like, which is displaceable on said guide rails, at least one telescope runner (a) being constructed to be collapsible via a joint in cable operation by means of a locking device (9, 13, 19, 20), which is likewise cable-operated and engages automatically, and the collapsed section of the telescope runner serving for guiding a further telescope runner, characterized in that the further telescope runner (a) is constructed as a rigid guide rail and is guided in relation to the collapsible telescope runner (b) in the collapsed position solely in the collapsed section (6) of the latter and is locked in this section.

2. Sloping elevator according to Claim 1, characterized in that the collapsing joint is formed by a hinged joint (4) bridging the guide rail travel path (7).

3. Sloping elevator according to Claim 2, characterized in that the hinged joint (4) bridging the guide rail travel path (7) is of broader construction than the guide rail travel path.

4. Sloping elevator according to Claim 2 or 3, characterized in that the hinged joint (4) bridging the guide rail travel path (7) is arranged above the guide rail travel path and has hinge flaps (5) tapering onto the level of the guide rail travel path.

5. Sloping elevator according to one of Claims 1 to 4, characterized in that the collapsed section (6) of the telescope runner (b) has a transverse bar (8), on which a part of the locking device (9) is arranged.

6. Sloping elevator according to Claim 5, characterized in that the transverse bar (8) is constructed to have two plates (plate (10), plate (11)) over parts of its width and a lever (14), loaded by a spring (12) and bearing the locking bolt (13), is guided between the plates.

7. Sloping elevator according to Claim 5 or 6, characterized in that guard rollers (15, 16) for the load cable (17) are arranged on the transverse bar (8).

8. Sloping elevator according to Claim 1, characterized in that the further telescope runner (a) has at its end a transverse rib (18) with a latch catch (20) forming the counter-lock (19).

9. Sloping elevator according to Claim 1, characterized in that extension limiters (21, 22) are arranged, on the one hand, on the collapsed section (6) and, on the other hand, in the further telescope runner (a).

10. Telescope runner according to Claim 1, in which the collapsing is effected via a rail cable guided over a plurality of rollers in the manner of a pulley and the rollers are mounted in a transverse bar below the further telescope runner, which transverse bar is guided in a sliding manner on the further telescope runner by means of guide shoes, characterized in that the transverse bar (26) has two rollers (24, 25) which are offset in the longitudinal direction of the telescope runner (a) and the axes (31, 32) of which extend obliquely in relation to each other.

11. Sloping elevator according to Claim 1, in which the collapsing is effected via a rail cable guided over a plurality of rollers in the manner of a pulley and the rollers are mounted in a transverse bar below the bottom telescope runner, which transverse bar is guided in a sliding manner on the further telescope runner by means of guide shoes and the guide shoes are connected via telescope tubes to the non-collapsed section of the telescope runner, characterized in that the telescope tubes (28) have an adjustable end stop (30).

12. Sloping elevator according to Claim 11, characterized in that the telescope tubes (28) are linked at the end in the manner of a fork (fork (33)), on the one hand, to a support bar (35) arranged on the non-collapsed section (29) of the collapsible telescope runner (b) and, on the other hand, in the manner of a fork (fork (34)) to the guide shoe (27) and a distancing screw is provided as the adjustable end stop (30).

FIG.1

FIG.2

FIG.3

FIG.4

3

FIG.5

FIG.6

FIG.7